# EUROPÄISCHE PATENTSCHRIFT

(11) **EP 0 873 846 B1**
(45) Veröffentlichungstag und Bekanntmachung des Hinweises auf die Patenterteilung: **02.01.2003**
(21) Anmeldenummer: 98105584.1
(22) Anmeldetag: 27.03.1998
(51) Int. Cl.: B29C 53/10, B29C 47/00

(54) **Abzugsvorrichtung für Schlauchbahnen aus Kunststoffolie**
Haul-off apparatus for plastic tubular films
Dispositif de tirage de films tubulaires en matière plastique

(30) Priorität: 24.04.1997 DE 29707373 U
(43) Veröffentlichungstag der Anmeldung: 28.10.1998
(73) Patentinhaber: Klaus Reinhold Maschinen- und Gerätebau GmbH, 49525 Lengerich (DE)
(72) Erfinder: Bäumer, Josef, 48496 Hopsten (DE); Ratz, Gerd, 49536 Lienen (DE)
(74) Vertreter: Busse & Busse Patentanwälte

(56) Entgegenhaltungen:
- EP-A- 0 408 996
- EP-A- 0 676 351
- DE-A- 2 035 584
- US-A- 5 589 201

## Beschreibung

Die Erfindung betrifft eine Abzugsvorrichtung für von einem Extruder mit ortsfest angeordnetem Blaskopf hergestellte Schlauchbahnen aus Kunststoffolie nach dem Oberbegriff des Anspruchs 1.

Bei der Herstellung von Schlauchbahnen aus Kunststoffolie im Blasverfahren lassen sich Dickentoleranzen nicht vermeiden. Diese entstehen z.B. aufgrund der üblichen Fertigungstoleranzen im Blaskopf des für die Folienherstellung verwendeten Extruders, in der im Anschluß an den Extrusionsvorgang von der Schlauchbahn mit aufgeweitetem Rundquerschnitt durchlaufenen Kalibriereinrichtung, durch die Innen- und Außenkühlung oder durch andere äußere Umstände. Beim Aufwickeln derartiger Schlauchfolienbahnen im flachgelegten Zustand in einer Wickelvorrichtung würden sich durch Addition der Dickentoleranzen ohne geeignete Gegenmaßnahmen auf dem Folienwickel Ringwülste bilden, die eine bleibende Deformation der Folie in diesem Bereich zur Folge hätten und das Bedrucken und die Weiterverarbeitung der Folienschlauchbahn erschweren würden.

Als geeignete Gegenmaßnahme zur Verhinderung der Ringwulstbildung auf dem Folienwickel sind sog. reversierende Abzugsvorrichtungen für die Schlauchbahn entwickelt worden, bei denen die Reversierbewegung der beteiligten Vorrichtungsteile beim Flachlegen der Schlauchbahn ein periodisches Wandern der Faltkanten bewirkt, die sich beim Flachlegen der Schlauchbahn bilden. Damit einher geht eine entsprechende Verteilung etwaiger Dickentoleranzen über die Breite der flachgelegten Schlauchbahn. Beim anschließenden Aufwickeln der flachgelegten Schlauchbahn oder zuvor hälftig getrennter Einzelbahnen in einer Aufwickelvorrichtung ist auf diese Weise die Bildung von Ringwülsten auf dem Wickel durch Addition von Dickentoleranzen der Folie vermieden. Es versteht sich, daß dabei der Schwenkwinkel der Reversierbewegung ausreichend groß gewählt werden muß.

Bei einer bekannten Vorrichtung (DE-C 20 35 584) wird die Flachlegevorrichtung mit ihren Abquetschwalzen über etwa 360° reversierend um die Achse der zugeführten Schlauchbahn geschwenkt, und es hat sich gezeigt, daß dieser Schwenkwinkel einer Reversierbewegung für die überwiegende Zahl von Anwendungsfällen einer reversierenden Abzugsvorrichtung angemessen ist, wobei neben zwei drehbaren Umlenkwalzen zum Umlenken der Bahn um etwa 180° zwei undrehbare Wendestangen zum Umlenken der Bahn um etwa 180° unter gleichzeitiger Richtungsänderung hintereinander und miteinander abwechselnd vorgesehen sind. Andererseits kann in den Anwendungsfällen, in denen der Schwenkwinkel der Reversierbewegung der Flachlegevorrichtung mit ihren Abquetschwalzen weniger als 360° beträgt, eine einzige Wendestange zwischen den beiden Umlenkwalzen für die Handhabung der Schlauchbahn im reversierenden Teil der Abzugsvorrichtung ausreichen. Es können aber auch mehr als zwei Umlenkwalzen und Wendestangen zum Einsatz kommen.

Bei der bekannten Abzugsvorrichtung ist die um die Achse der zugeführten Schlauchbahn schwenkbare Abstüzung der Umlenkwalzen und der Wendestangen in der Vorrichtung in der Weise vorgenommen, daß die Achsen der Umlenkwalzen und der Wendestangen tangential zu Kreisen um die Drehachse der Flachlegevorrichtung verlaufen, wobei die Umlenkwalzen sich in jeder möglichen Betriebsstellung radial außerhalb der von der Schlauchbahn umschlungenen Teile der Wendestangen befinden. Die Schwenkwinkel der Umlenkwalzen und der Wendestangen nehmen mit steigender Entfernung von der Flachlegevorrichtung ab, und der Folienschlauch wird zwischen den Umlenkwalzen und Wendestangen sowie der ortsfesten Fördereinrichtung zum Abtransportieren der flachgelegten Schlauchbahn in zueinander parallelen, horizontalen Ebenen geführt. Hierdurch ist eine geringe Bauhöhe des reversierenden Systems erreicht, wobei außerdem durch die Maßnahme, daß der Radius des von dem Schwenkweg der Achsen der Wendestangen umschriebenen Kreises die Größe π/4 x Wendestangendurchmesser beträgt, einem seitlichen Verlaufen der Kunststoffolien-Schlauchbahn während des Verschwenkens des Reversiersystems entgegengewirkt wird. Dabei ergibt sich, daß der Schnittpunkt der Mittenachsen der auf die Wendestange jeweils zu- und von der Wendestange jeweils ablaufenden Schlauchbahnstränge in der zentralen Schwenkachse des reversierenden Systems liegt. Während der reversierenden Schwenkbewegung ist so gewährleistet, daß sich die Schlauchbahnstränge scherenartig um die Schwenkachse öffnen und schließen, so daß theoretisch auf beide Schlauchbahnstränge symmetrisch einander entgegengesetzte gleiche Reibungskräfte einwirken und somit von der Konzeption her axiale Verschiebungen der Schlauchbahn auf den Wendestangen während des Reversierbetriebes infolge einseitig wirkender Reibungskräfte vermieden sind.

Bei der bekannten Abzugsvorrichtung sind die Flachlegevorrichtung, die Umlenkwalzen und die Wendestangen sämtlich an einer relativ dünnen Mittelwelle zur Ausführung ihrer reversierenden Schwenkbewegungen abgestützt, die in der vertikalen Verlängerung der Achse der zugeführten Schlauchbahn verläuft und im Vorrichtungsgestell drehbar gelagert ist. Das gesamte Gewicht des reversierenden Systems wird dabei von der Mittelwelle getragen, mit der Folge, daß das reversierende System sehr anfällig für Schwankungen und Pendelbewegungen ist, die sich, insbesondere bei einer infolge eines langen vertikalen Abzugswegs entsprechend hoch angeordneten Abzugsvorrichtung, sehr schnell einstellen, wenn sich beispielsweise eine Bedienungsperson auf dem zugehörigen Laufsteg der Abzugsvorrichtung bewegt. Außerdem gestalten sich die Montage und die Wartung des bekannten Reversiersystems und insbesondere auch das Einführen der Schlauchbahn in die Abzugsvorrichtung zu Beginn eines Extrusionsvorgangs wegen der in der Vorrichtungsmitte in Verlängerung der Achse der zugeführten Schlauchbahn angeordneten Tragwelle zeitraubend und umständlich, da dieser mittlere Bereich schwer zugänglich ist und zum Teil von der durch die Vorrichtung hindurchgeförderten Schlauchbahn eingenommen wird.

EP-B-0 408 996 beschreibt eine bekannte Abzugsvorrichtung gemäß dem Gattungsbegriff des Patentanspruchs 1 mit mehreren senkrecht übereinander angeordneten Drehkränzen, die über ein Reversiergetriebe mit unterschiedlichen Schwenkwinkeln reversierend antreibbar sind. Das Vorrichtungsgestell umfaßt dabei einen oberen horizontalen Auflagerteil mit einem Halterahmen zur drehbaren unterseitigen Abstützung der Drehkränze, und die Drehkränze und der Halterahmen sind zur Ausbildung eines um die Achse der Schlauchbahn drehbaren, auf Druck beanspruchten Drehkranzpaketes unmittelbar aufeinander bzw. auf dem Halterahmen über zwischengelegte Wälzkörper abgestützt. Der Innendurchmesser der Drehkränze ist bei dieser bekannten Ausgestaltung gleich der maximalen Arbeitsbreite der Vorrichtung gewählt, die der größtmöglichen, in der Vorrichtung handhabbaren Bahnbreite der flachgelegten Schlauchbahn entspricht. Aufgrund dieser Maßverhältnisse stellt das Drehkranzpaket ein stabiles Gebilde dar, durch das zwar störende Schwankungen bzw. Pendelbewegungen beim Begehen eines am Vorrichtungsgestell angebrachten Lauf- bzw. Arbeitsstegs praktisch ausgeschlossen sind, andererseits jedoch die Zugänglichkeit des Reversiersystems von der Flachlegevorrichtung her durch das zwischengelegte-Drehkranzpaket mit seinem Halterahmen behindert wird.

Der Erfindung liegt daher die Aufgabe zugrunde, eine Abzugsvorrichtung der gattungsgemäßen Art unter Beibehaltung der anhand der eingangs genannten DE-C 20 35 584 erläuterten Kinematik des reversierenden Systems und der dadurch erreichten kontrollierten Führung der Schlauchbahn von einem ortsfesten Schlauchfolienblaskopf durch die reversierende Abzugsvorrichtung zu einer ihrerseits ortsfesten Wickelvorrichtung zu schaffen, bei der einerseits das reversierende System eine verbesserte, störende Schwankungen und Pendelbewegungen vermeidende Stabilität besitzt und andererseits zugleich eine gute Zugänglichkeit des Reversiersystems von der Flachlegevorrichtung her gewährleistet ist.

Diese Aufgabe wird nach der Erfindung durch eine Ausgestaltung der Abzugsvorrichtung gemäß dem Anspruch 1 gelöst. Dadurch, daß bei dieser Ausgestaltung die Umlaufrädergetriebe jeweils als offenes Planetengetriebe ausgebildet sind, bei dem die das jeweilige Planetenrad tragenden Stege zu einer gemeinsamen Getriebebrücke als Baueinheit zusammengefaßt sind, ist eine stabile Haltekonstruktion geschaffen, die es möglich macht, auf eine koaxial in der mittleren Vertikalachse der Vorrichtung angeordnete mittlere Tragwelle für den Antrieb der einzelnen Umlaufrädergetriebe zu verzichten, und im Verein mit den ihrerseits durch ihre konstruktive Ausbildung einer Einleitung von Schwenk- und Pendelbewegungen entgegenwirkenden Drehkränzen eine hohe Gesamtstabilität der Vorrichtung herbeiführt. Da zudem bei der erfindungsgemäßen Ausgestaltung die Drehkränze sowie die Umlenkwalzen und Wendestangen mit ihren Halterungen in der einen Schwenkrahmen bildenden Getriebebrücke abgestützt sind, sind die konstruktiven Voraussetzungen für eine einfache Führung der flachgelegten Schlauchfolie von der Flachlegevorrichtung vorbei an einem Drehkranz oder einem für diesen vorrichtungsseitig vorgesehenen Halterahmen zur ersten Umlenkwalze geschaffen, so daß insoweit bei einer guten Zugänglichkeit zum Reversiersystem auch ein leichtes Einziehen der Schlauchfolie in das Reversiersystem speziell zu Beginn eines Extrusionsvorgangs gegeben ist.

Zahlreiche weitere Merkmale und Vorteile der Erfindung ergeben sich aus den Unteransprüchen und der nachstehenden Beschreibung in Verbindung mit der Zeichnung, in der ein Ausführungsbeispiel des Gegenstands der Erfindung rein schematisch veranschaulicht ist. In der Zeichnung zeigen:
- Fig. 1: ein Schemabild einer Blasfolienextrusionsanlage,
- Fig. 2: eine Seitenansicht einer bei der Blasfolienextrusionsanlage nach Fig. 1 Verwendung findenden Abzugsvorrichtung mit Reversiersystem für eine durch Extrusion hergestellte Schlauchbahn,
- Fig. 3: eine vereinfachte Draufsicht auf eine sämtlichen Umlaufrädergetrieben des Reversiersystems gemeinsame Getriebebrücke in einer aus einer 0°-Stellung verschwenkten momentanen Zwischenstellung von -78,3°,
- Fig. 4: eine Darstellung entsprechend Fig. 3 unter zusätzlicher Veranschaulichung der entsprechenden Momentanstellung einer Wendestange mit einem Schwenkwinkel von ±45°,
- Fig. 5: eine Darstellung entsprechend Fig. 3 unter zusätzlicher Veranschaulichung der entsprechenden Momentanstellung einer Wendestange mit einem Schwenkwinkel von ±135°,
- Fig. 6: eine Darstellung entsprechend Fig. 3 unter zusätzlicher Veranschaulichung der entsprechenden Momentanstellung einer einen Schwenkwinkel von ±180° ausführenden Flachlegevorrichtung mit Abquetschwalzen,
- Fig. 7: eine vereinfachte Draufsicht auf die reversierende Abzugsvorrichtung in ihrer 0°-Stellung gemäß Fig. 2, entsprechend einer Mittelstellung des Reversierweges der Flachlegevorrichtung, und
- Fig. 8 bis 10: Darstellungen entsprechend Fig. 7 zur Veranschaulichung unterschiedlicher Betriebsstellungen der reversierenden Teile der Abzugsvorrichtung, jeweils nach einem Schwenkweg der Flachlegevorrichtung von + 180°, -180° bzw. -78,3°, ausgehend von der Mittelstellung gemäß Fig. 7.

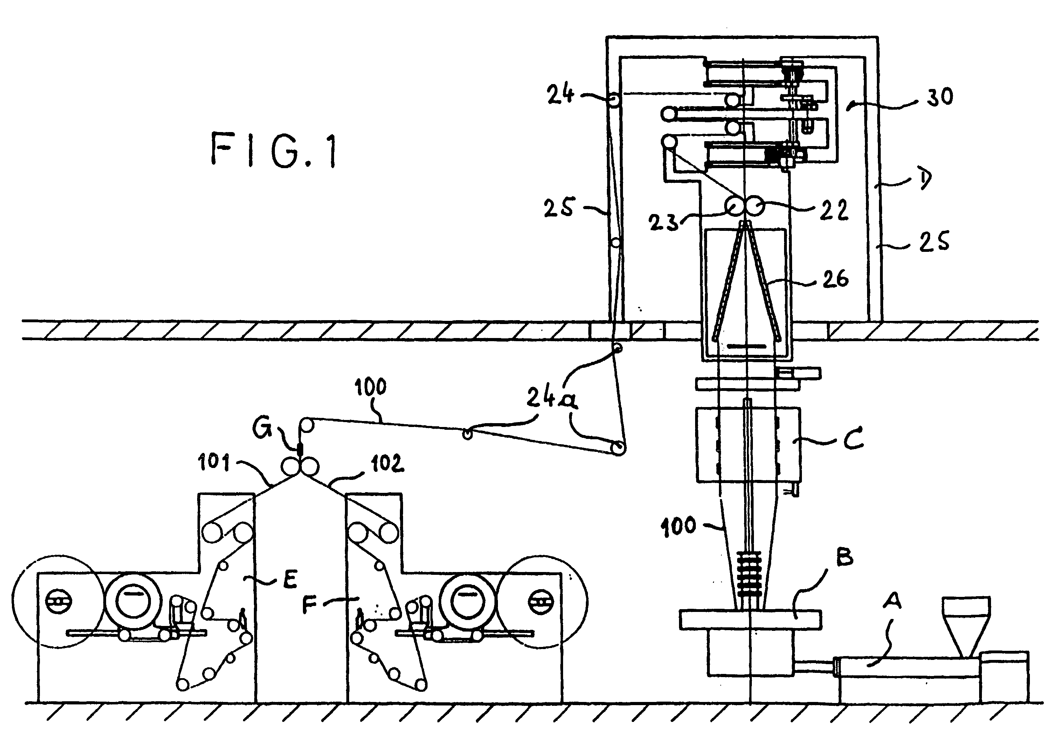

In Fig. 1 ist in einer schematischen Übersicht eine Blasfolienextrusionsanlage mit einem Extruder A dargestellt, der ortsfest auf dem Hallenboden einer Fabrikationsanlage abgestützt ist. Der Extruder A besitzt einen Blaskopf B, der seinerseits ortsfest am Extruder A abgestützt ist. Die im Extruder A aus einem Kunststoffgranulat erzeugte Schmelze wird vom Blaskopf B als Schlauchbahn 100 mit aufgeweitetem Rund- bzw. Kreisquerschnitt abgegeben und über eine Kalibriervorrichtung C und eine Flachlegevorrichtung 26, an die sich Abquetschwalzen 22 und 23 anschließen, einer als Ganzes mit 30 bezeichneten reversierenden Abzugsvorrichtung zugeführt. Die Schlauchbahn 100 wird dabei in senkrechter Richtung vom Blaskopf B des Extruders A über eine größere Strecke, wie sie zur Abkühlung und Verfestigung der Kunststoffolie erforderlich ist, nach oben zur Abzugsvorrichtung 30 geführt, die demgemäß üblicherweise im Deckenbereich der Fabrikationshalle angeordnet ist.

Hierzu umfaßt die Abzugsvorrichtung 30 ein Vorrichtungsgestell D, das mit vier senkrechten Stützen 25 auf einer Zwischendecke der Fabrikationshalle abgestützt ist. Von einer frei drehbar zwischen zwei Vorrichtungsstützen 25 (in Fig. 1 links) gelagerten Umlenkwalze 24 gelangt die nach Durchlaufen der Abquetschwalzen 22, 23 flachgelegte Schlauchbahn 100 durch eine Öffnung in der Zwischendecke über eine Reihe ortsfester, jedoch frei drehbarer Führungsrollen 24a zu einer Trennvorrichtung G, in der die Schlauchbahn 100 hälftig in zwei einzelne Flachbahnen 101 und 102 aufgeteilt wird, die dann jeweils einem Wickler E bzw. F zugeführt und dort zu Rollen aufgewickelt werden. Die Wickler E und F bringen mit ihren Wickelmotoren die notwendige Abzugkraft auf die Schlauchbahn 100 auf, wobei die Umlenkwalze 24 eine ortsfeste Fördereinrichtung gegenüber dem Reversiersystem der Abzugvorrichtung 30 bildet.

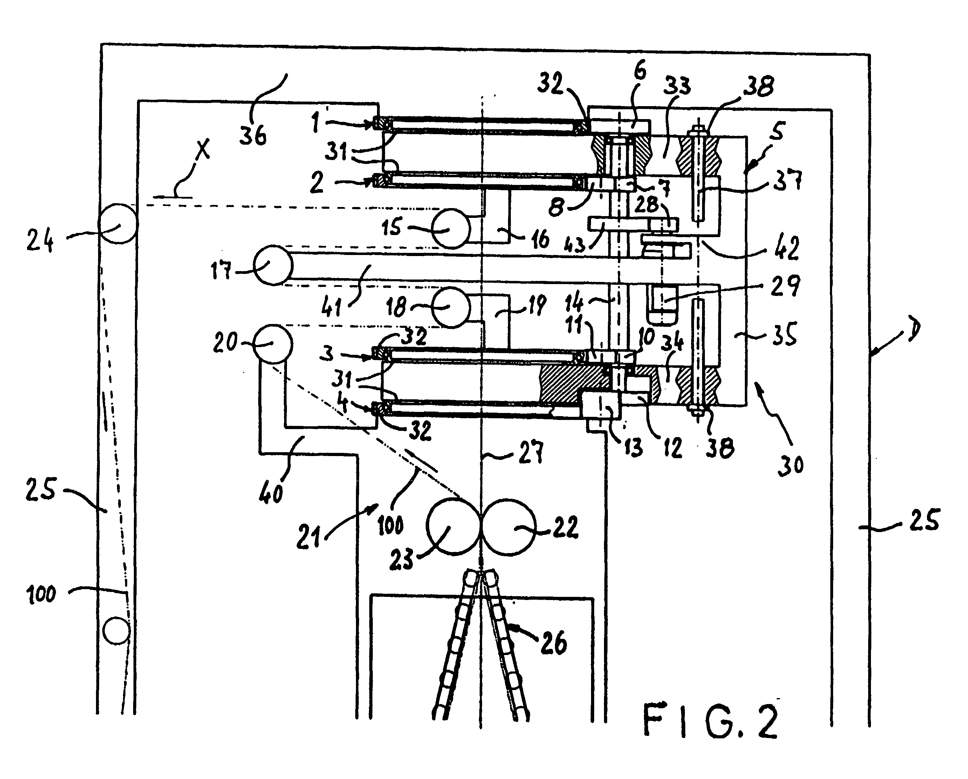

Das reversierende Abzugsystem umfaßt bei dem in der Zeichnung (Fig. 2) dargestellten Beispiel vier Drehkränze 1 bis 4, die als Standardbauteile mit Innenring 31 und am Außenumfang verzahntem Außenring 32 in selbsthaltender Ausführung auf dem Markt erhältlich sind. Vorzugsweise werden Drehkränze mit einem Mindestinnendurchmesser von 600 mm verwendet, wobei dieser Innendurchmesser für die Energiezuführung herangezogen werden kann. Die Drehkränze 1 bis 4 weisen sämtlich den gleichen Teilkreis auf und liegen mit ihren Mittelpunkten in der mittleren Vertikalachse 27 der reversierenden Abzugsvorrichtung 30.

Über je ein Umlaufrädergetriebe werden die Drehkränze 1 bis 4 mit unterschiedlichen Schwenkwinkeln reversierend angetrieben. Jedes Umlaufrädergetriebe ist dabei als offenes Planetengetriebe mit dem verzahnten Außenring 32 des zugehörigen Drehkranzes 1 bis 4 als Sonnenrad und einem diesem zugeordneten Planetenrad 6, 7, 10, 12 ausgebildet.

Die das jeweilige Planetenrad 6, 7, 10, 12 tragenden Stege sind zu einem gemeinsamen Steg 5 zusammengefaßt, der eine Getriebebrücke bildet. Die Getriebebrücke 5 bildet zugleich einen Schwenkrahmen, der in Abziehrichtung (Pfeil X in Fig. 2) der Schlauchbahn 100 offen ausgebildet ist und einen oberen waagerechten Rahmenschenkel 33, einen unteren waagerechten Rahmenschenkel 34 und einen diese an der der offenen Rahmenseite gegenüberliegenden Seite verbindenden senkrechten Rahmenschenkel 35 umfaßt. Die beiden Rahmenschenkel 33 und 34 dienen der Abstützung der Drehkränze 1 bis 4.

Im einzelnen stützt der obere waagerechte Rahmenschenkel 33 den Innenring 31 des oberen Drehkranzes 1 ab, dessen äußerer Zahnkranz 32 an der Unterseite einer oberen waagerechten Strebe 36 des Vorrichtungsgestells D festgelegt ist. Der untere waagerechte Rahmenschenkel 34 stützt den Innenring 31 des unteren Drehkranzes 4 ab, dessen äußerer Zahnkranz 32 an einem Seitengestell 21 befestigt ist, das die Flachlegevorrichtung 26 sowie die Abquetschwalzen 22 und 23 und über einen Ausleger 40 eine in Abziehrichtung X der Schlauchbahn 1 erste Umlenkwalze 20 trägt, die frei drehbar in den beiden Armen des doppelarmig ausgebildeten Auslegers 40 gelagert ist.

Der Innenring 31 des oberen Drehkranzes 1 ist auf der Oberseite des oberen Rahmenschenkels 33 abgestützt, wobei an dessen Unterseite der Innenring 31 des Drehkranzes 2 festgelegt ist. Der Innenring 31 des unteren Drehkranzes 4 ist an der Unterseite des unteren Rahmenschenkels 34 festgelegt, auf dessen Oberseite wiederum der Innenring 31 des Drehkranzes 3 abgestützt ist.

Entsprechend den vier Drehkränzen 1 bis 4 kommen bei dem in der Zeichnung dargestellten Reversiersystem zwei Umlenkwalzen 17 und 20 sowie zwei Wendestangen 15 und 18, die jeweils wechselweise übereinander in vertikal voneinander beabstandeten horizontalen Ebenen angeordnet sind, zum Einsatz. Während die erste Umlenkwalze 20 über das Gestell 21 am äußeren Zahnkranz 32 des Drehkranzes 4 abgestützt ist, ist die in Abziehrichtung X zweite Umlenkwalze 17 an der Getriebebrücke 5 in einem Zwischenbereich zwischen den beiden waagerechten Rahmenschenkeln 33 und 34 des Schwenkrahmens bzw. der Getriebebrücke 5 abgestützt. Die Umlenkwalze 17 ist dabei zwischen den beiden Armen eines doppelarmig ausgebildeten Auslegers 41 frei drehbar gelagert, der sich, ausgehend von einem an den senkrechten Rahmenschenkel 35 der Getriebebrücke 5 angrenzenden Bereich durch eine die mittlere Vertikalachse 27 enthaltende Vertikalebene hindurch zur offenen Seite des Schwenkrahmens 5 erstreckt.

Die beiden Wendestangen 15 und 18, die als sog. Luftwendestangen ausgebildet sein können, sind ihrerseits zwischen den beiden Enden der beiden Arme der wiederum doppelarmig ausgebildeten Halterungen 16 und 19 wie üblich drehfest bzw. undrehbar gehalten. Während die Halterung 16 der Wendestange 15 am äußeren Zahnkranz 32 des Drehkranzes 2 in einer Ebene oberhalb der Umlenkwalze 17 festgelegt ist, ist die Halterung 19 der Wendestange 18 am äußeren Zahnkranz 32 des Zahnkranzes 3 in einer Ebene unterhalb der Ebene der Umlenkwalze 17 festgelegt.

Die Getriebebrücke 5 hat eine selbsttragende Konstruktion, die ihr eine solche Steifheit vermittelt, daß auf eine abstützend wirkende Mittelwelle verzichtet werden kann. Um insbesondere bei einem Einsatz einer schweren Flachlegevorrichtung 26 mit schweren Abquetschwalzen 22, 23 einem Spreizen der Getriebebrücke 5 unter der Wirkung des an diesen angehängten Gewichts entgegenzuwirken, können, wie dies in Fig. 2 angedeutet ist, Zugstangen 37 in zweckmäßiger Anordnung und Anzahl in vertikaler Ausrichtung zwischen die Rahmenschenkel 33 und 34 gespannt werden, die durch Spannmuttern 38 auf der Oberseite des oberen Rahmenschenkels 33 bzw. der Unterseite des unteren Rahmenschenkels 34 entsprechend angezogen werden. Diese Zugstangen 37 können auch vorteilhaft zum Ausrichten des Reversiergetriebes herangezogen werden.

Für den Antrieb der einzelnen Planetengetriebe ist es grundsätzlich möglich, jedem der Drehkränze 1 bis 4 einen eigenen Antrieb zuzuordnen. Für diese Einzelantriebe könnte die Getriebebrücke 5 mit entsprechenden Abstützungen versehen sein, oder aber sämtliche Einzelantriebe würden außen fest am Vorrichtungsgestell D montiert werden, um die einzelnen Drehkränze 1 bis 4 in der gewünschten Drehzahl anzutreiben. Die Antriebe müßten dabei in ihren Abtriebsdrehzahlen genau aufeinander abgestimmt sein.

Bei dem dargestellten Beispiel werden jedoch sämtliche Drehkränze 1 bis 4 von einem gemeinsamen Antriebsmotor 29 über eine gemeinsame Antriebswelle 14 mit den entsprechenden Übersetzungsverhältnissen reversierend angetrieben. Der Antriebsmotor 29 ist in einer Aufnahme 42 nahe dem vertikalen Rahmenschenkel 35 abgestützt, um über ein Antriebszahnrad 28 direkt eines der Planetenräder 6, 7, 10, 12 oder, wie in Fig. 2 dargestellt, über ein Zahnrad 43 die Antriebswelle 14 anzutreiben, die parallel zur mittleren Vertikalachse 27, jedoch mit waagerechtem Abstand von dieser, in der Getriebebrücke 5 drehbar abgestützt ist.

Die Planetenräder 6, 7, 10, 12 der einzelnen Planetengetriebe sind in gegenseitiger vertikaler Beabstandung entsprechend den Drehkränzen 1 bis 4 auf der Antriebswelle 14 festgelegt. Dabei stehen die Planetenräder 6, 7, 10, 12 teilweise direkt, teilweise über ein oder mehrere Zwischenräder mit dem äußeren Zahnkranz 32 des jeweiligen Drehkranzes 1, 2, 3, 4 in Zahneingriff.

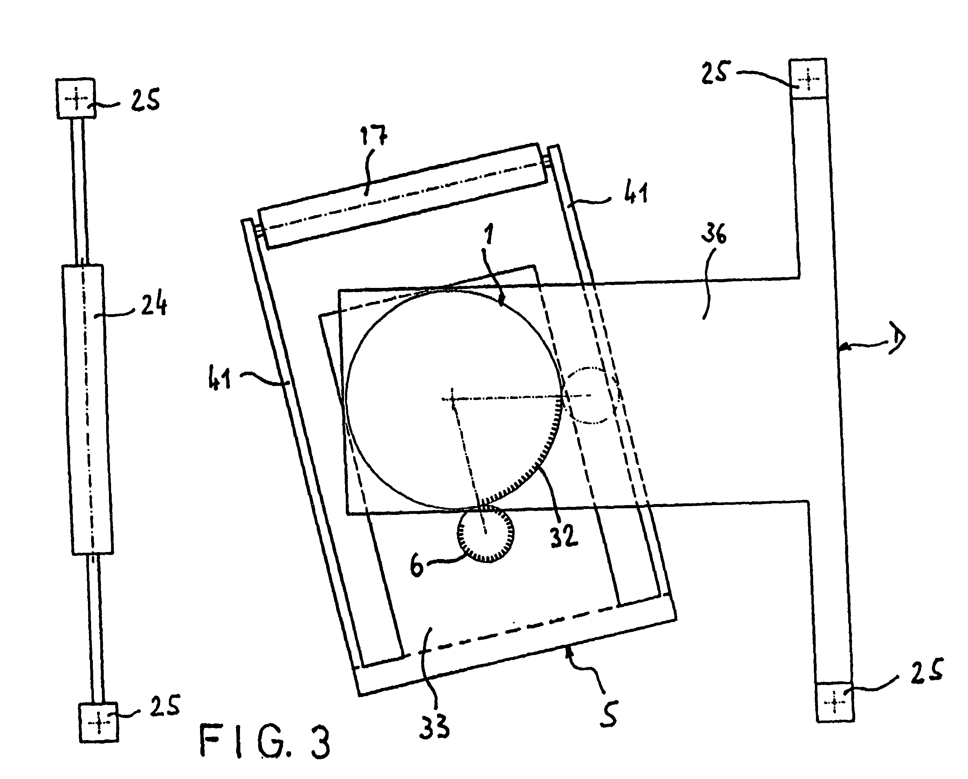

Die Funktionsweise des Reversiergetriebes wird nachstehend anhand der Fig. 3 bis 6 erläutert, die aus Gründen der Übersichtlichkeit in ihrer Darstellung im wesentlichen auf die Bauteile der jeweils betrachteten einzelnen Ebenen beschränkt sind. Fig. 3 verdeutlicht, daß sich beim Drehen der Antriebswelle 14 das Planetenrad 6 auf dem als Sonnenrad wirkenden äußeren Zahnkranz 32 des Drehkranzes 1, der an der hier als Ausleger dargestellten Gestellstrebe 36 festgelegt ist, abwälzt und dabei die Getriebebrücke mitnimmt. Die Getriebebrücke 5 führt bei dem gewählten Beispiel einen Schwenkwinkel von ± 90° aus.

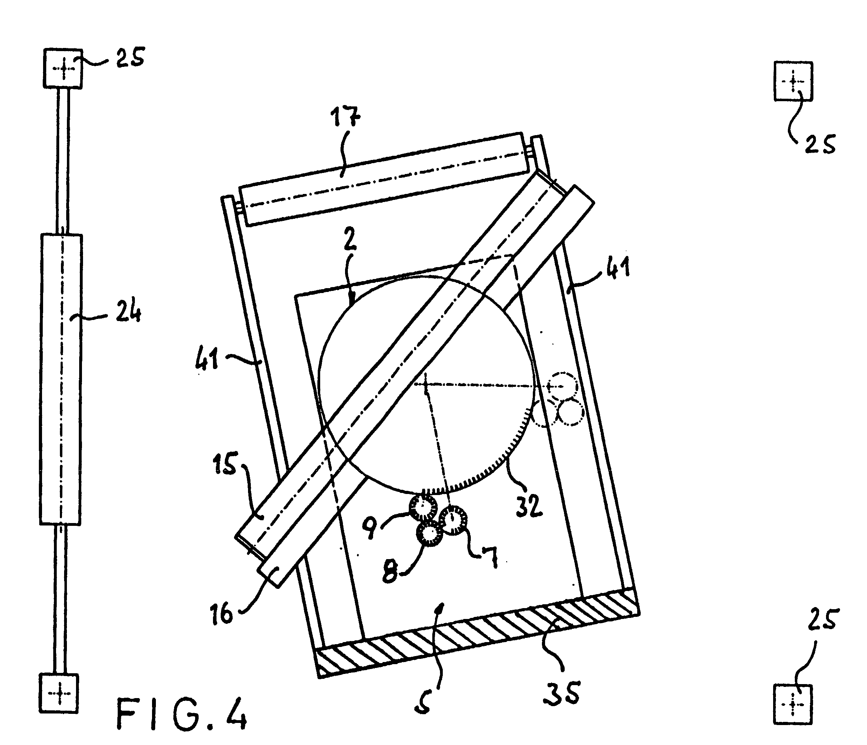

Fig. 4 zeigt, daß der als Sonnenrad wirkende äußere Zahnkranz 32 des Drehkranzes 2 über Zwischenräder 8 und 9 mit dem fest auf der Antriebswelle 14 sitzenden Planetenrad 7 in Eingriff steht. Wälzt sich das Planetenrad 6 auf dem äußeren Zahnkranz 32 des Drehkranzes 1 ab und nimmt die Getriebebrücke 5 mit (Fig. 3), wird durch den Eingriff der Zähne des Planetenrades 7 und der Zwischenräder 8 und 9 mit dem äußeren Zahnkranz 32 des Drehkranzes 2 dieser als Sonnenrad um den gleichen Drehwinkel, um den sich die Getriebebrücke 5 verdreht, mitgenommen. Das Planetenrad 7 hat dabei nur die Hälfte der Zähnezahl des Planetenrades 6, so daß, da sich beim Drehen der Antriebswelle 14 das Planetenrad 7 ebenfalls dreht, der äußere Zahnkranz 32 des Drehkranzes 2 um den halben Drehwinkel der Getriebebrücke 5 aufgrund des den Richtungswechsel herbeiführenden zweiten Zwischenrades 9 zurückgedreht wird. Der äußere Zahnkranz 32 des Drehkranzes 2 erhält auf diese Weise eine Schwenkbewegung von ±45°.

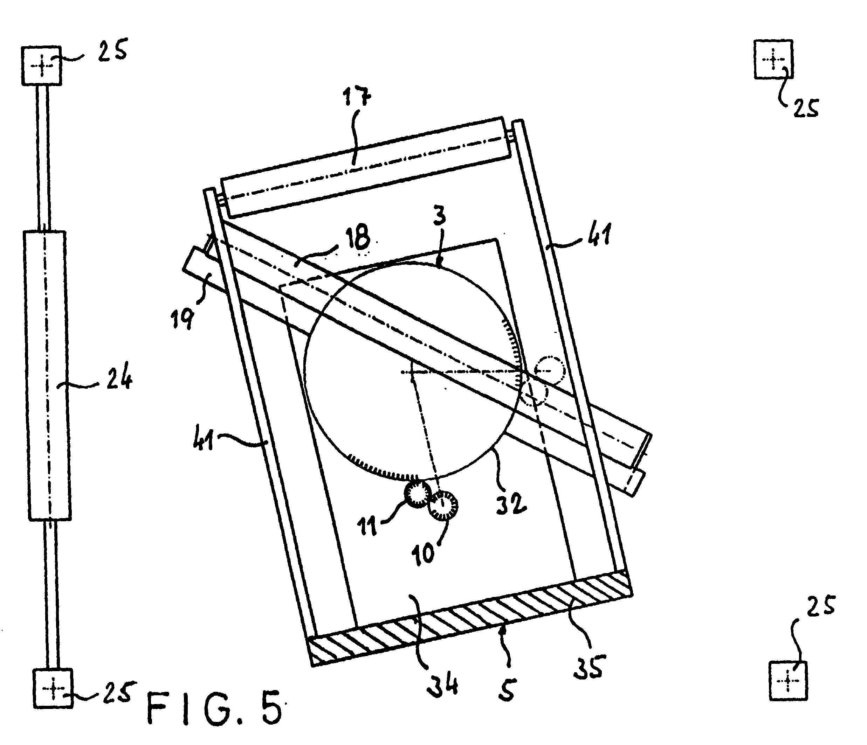

Wie Fig. 5 zeigt, steht der äußere Zahnkranz 32 des Drehkranzes 3 wiederum nicht direkt mit dem Planetenrad 10 als Antriebsrad in Eingriff, sondern über ein Zwischenrad 11. Bei dem Verdrehen der Getriebebrücke 5 wird auch der Zahnkranz 32 des Drehkranzes 3 um den gleichen Verdrehwinkel mitgenommen. Zusätzlich wird der äußere Zahnkranz 32 des Drehkranzes 3 um den halben Drehwinkel der Getriebebrücke 5 weitergedreht. Dies wird dadurch erreicht, daß das Planetenrad 10 wiederum nur die Hälfte der Zähnezahl des Planetenrades 6 aufweist. Der äußere Zahnkranz 32 des Drehkranzes 3 erhält hierdurch eine Schwenkbewegung von ±135°.

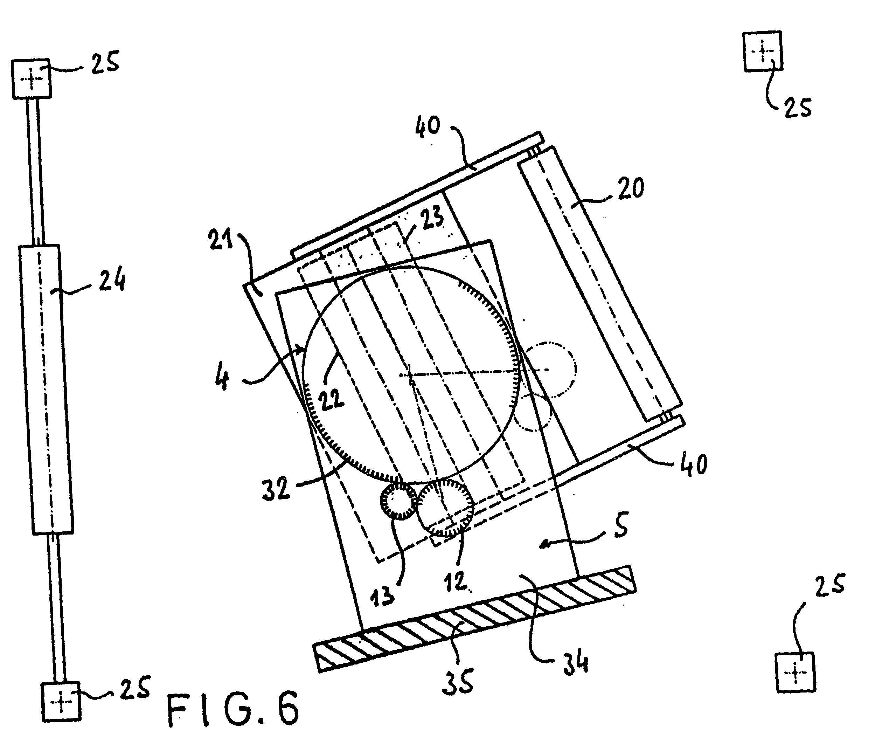

Fig. 6 verdeutlicht, daß der äußere Zahnkranz 32 des Drehkranzes 4 über ein Zwischenrad 13 mit dem fest auf der Antriebswelle 14 sitzenden Planetenrad 12 in Zahneingriff steht. Beim Verdrehen der Getriebebrücke 5 wird der Zahnkranz 32 des Drehkranzes um den gleichen Verdrehwinkel wie die Getriebebrücke 5 mitgenommen. Das Planetenrad 12 weist die gleiche Zähnezahl wie das Planetenrad 6 auf, und beim Drehen der Antriebswelle 14 wird der äußere Zahnkranz 32 des Drehkranzes 4 zusätzlich um den Drehwinkel der Getriebebrücke 5 weitergedreht. Der äußere Zahnkranz 32 des Drehkranzes 4 erhält hierbei einen Schwenkwinkel von ±180°.

Bei dem hier beschriebenen Reversiersystem mit zwei Wendestangen 15, 18 und zwei Umlenkwalzen 17, 20 in vier übereinander angeordneten Ebenen betragen demgemäß die maximalen Verdrehwinkel der einzelnen Ebenen zueinander ±45°, ±90°, ±135° und ±180°. Diese Funktion wird bei dem beschriebenen Reversiergetriebe dadurch erreicht, daß die äußeren Zahnkränze 32 der Drehkränze 1 bis 4 sämtlich eine gleiche Anzahl von Zähnen aufweisen, zwei der Planetenräder, nämlich die Planetenräder 6 und 12 ihrerseits eine gemeinsame gleiche Anzahl von Zähnen besitzen, die durch 2 teilbar ist, und die beiden anderen Planetenräder, nämlich die Planetenräder 7 und 10, die Hälfte der Zähnezahl der beiden Planetenräder 6 und 12 aufweisen. Die Zwischenräder 8, 9, 11, 13 sind in ihrer Zähnezahl frei wählbar.

Anstelle des beschriebenen Reversiersystems mit zwei Wendestangen 15, 18 und zwei Umlenkwalzen 17, 20, die zusammen in vier vertikal voneinander beabstandeten Schwenkebenen arbeiten, kann es in einfachen Fällen ausreichen, nur eine Wendestange und eine Umlenkwalze im Reversiersystem vorzusehen, die demnach nur in zwei Schwenkebenen mit entsprechend bemessenen unterschiedlichen Schwenkwinkeln arbeiten. Es ist aber genausogut möglich, drei oder mehr Wendestangen und entsprechend drei oder mehr Umlenkwalzen in einem entsprechend aufwendiger gestalteten Reversiersystem vorzusehen, wobei, wenn in insgesamt sechs übereinander angeordneten Schwenkebenen gearbeitet wird, die Schwenkwinkel der einzelnen Ebenen eine 30°-Abstufung, von 30° bis 180°, durch die entsprechende Auswahl der Planetenräder aufweisen können.

Obgleich in der vorstehenden Beschreibung das Reversiergetriebe als Zahnradgetriebe beschrieben worden ist, versteht sich, daß das Getriebe nach den gleichen Richtlinien auch als Ketten- oder Zahnriemengetriebe unter Verwendung der entsprechenden Kettenräder und Zahnriemenräder gestaltet sein kann.

Im Betrieb der Vorrichtung wird die Schlauchfolie 100 in Richtung X abgezogen und läuft nach dem Verlassen der Abquetschwalzen 22, 23 schräg unten an dem untersten Drehkranz 4 vorbei um die erste Umlenkwalze 20 herum, die in einer ersten Schwenkebene angeordnet ist und in dieser eine Schwenkbewegung in der Horizontalen mit einem Winkel von ±180° zusammen mit der Flachlegevorrichtung 26 und den Abquetschwalzen 22, 23 ausführt. Sodann wird die Schlauchbahn 100 um die erste Wendestange 18 umgelenkt, die eine zweite horizontale Ebene einnimmt und in dieser eine reversierende Schwenkbewegung von ±135° ausführt. Von der Wendestange 18 gelangt die Schlauchbahn 100 zu der an der Getriebebrücke 5 befestigten zweiten Umlenkwalze 17 in der dritten Ebene, in der sie eine reversierende Schwenkbewegung von ±90° ausführt. Danach erreicht die Schlauchfolie 100 die bei dem dargestellten Beispiel letzte Ebene, die vierte Ebene, in der ihr über das beschriebene Getriebe eine Reversierbewegung mit einem Schwenkwinkel von ±45° vermittelt wird. Sodann wird die Schlauchbahn 100 über die Umlenkwalze 24 als ortsfeste Fördereinrichtung der Trennvorrichtung G bzw. den beiden Wicklern E und F zugeführt. Die Umsteuerung des Reversiergetriebes am Ende des jeweiligen Schwenkbewegungsanteils kann über entsprechend plazierte Endschalter erfolgen.

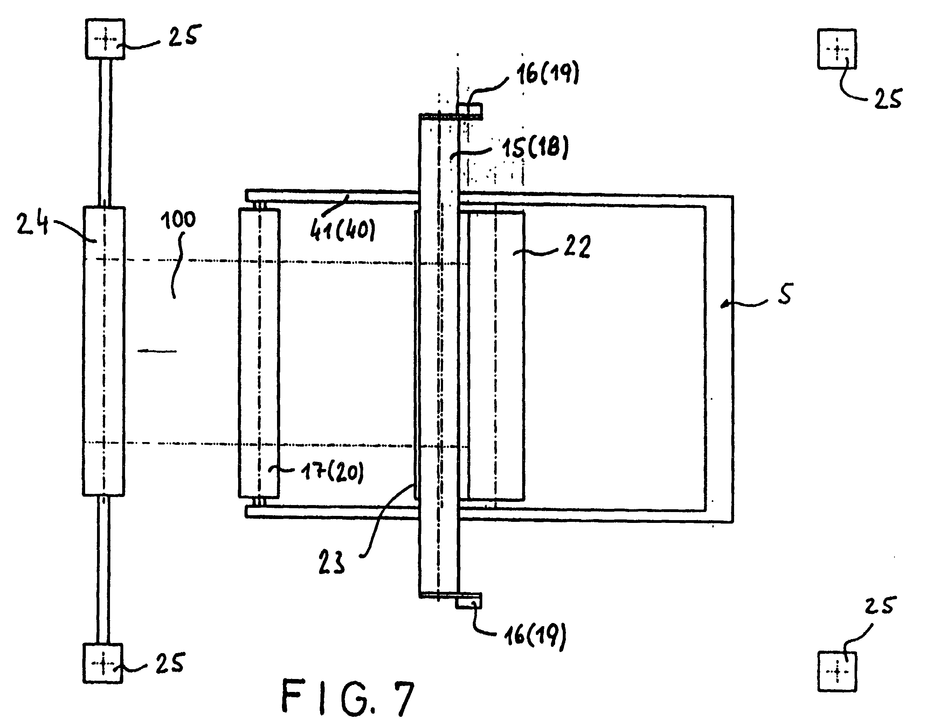

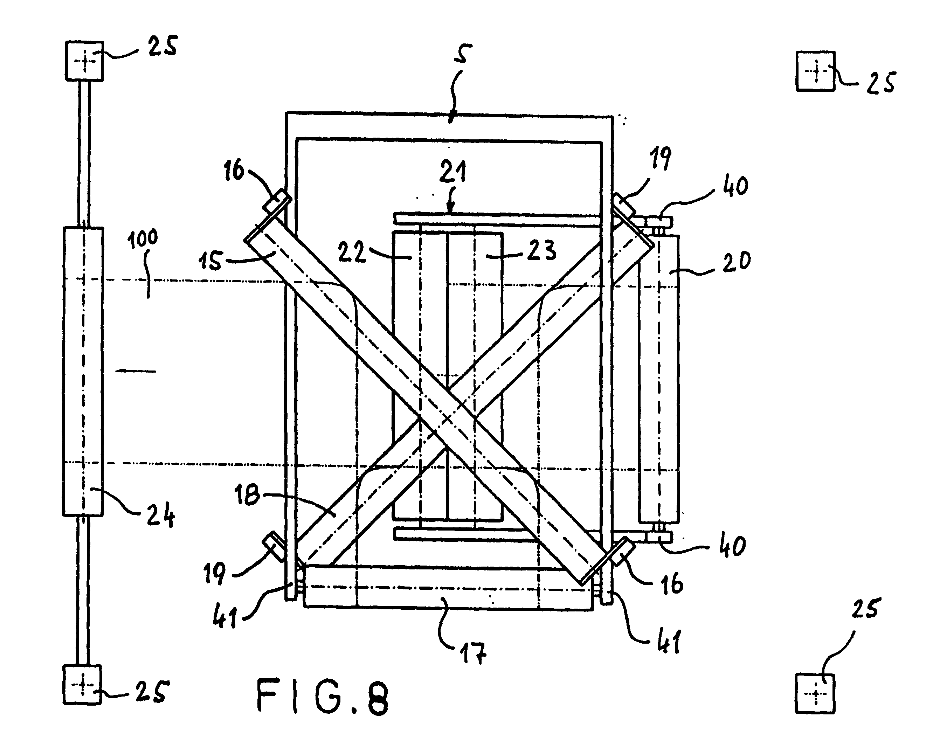

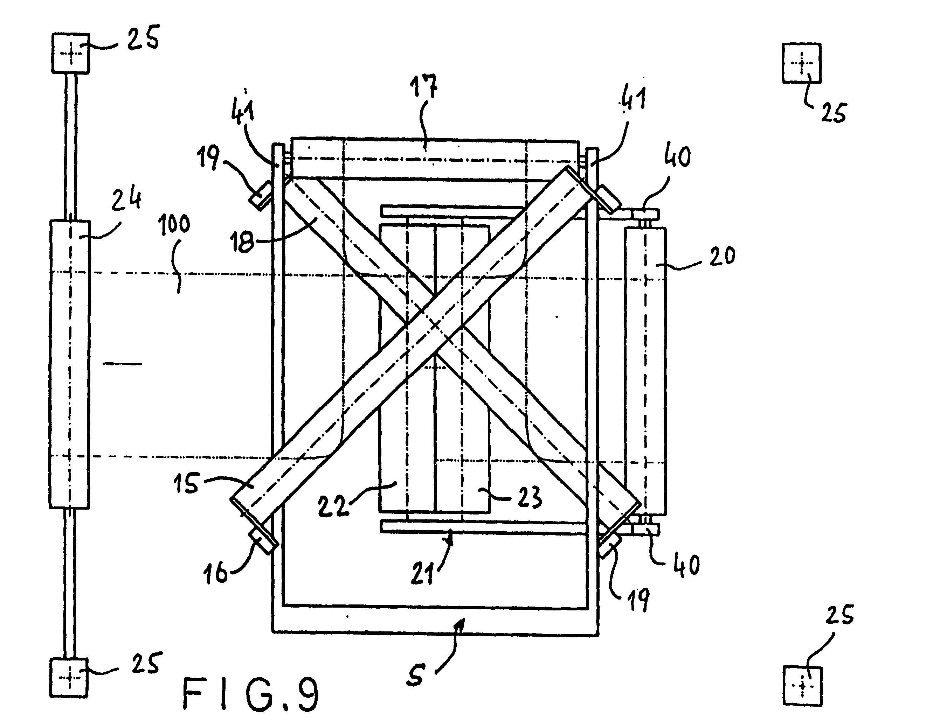

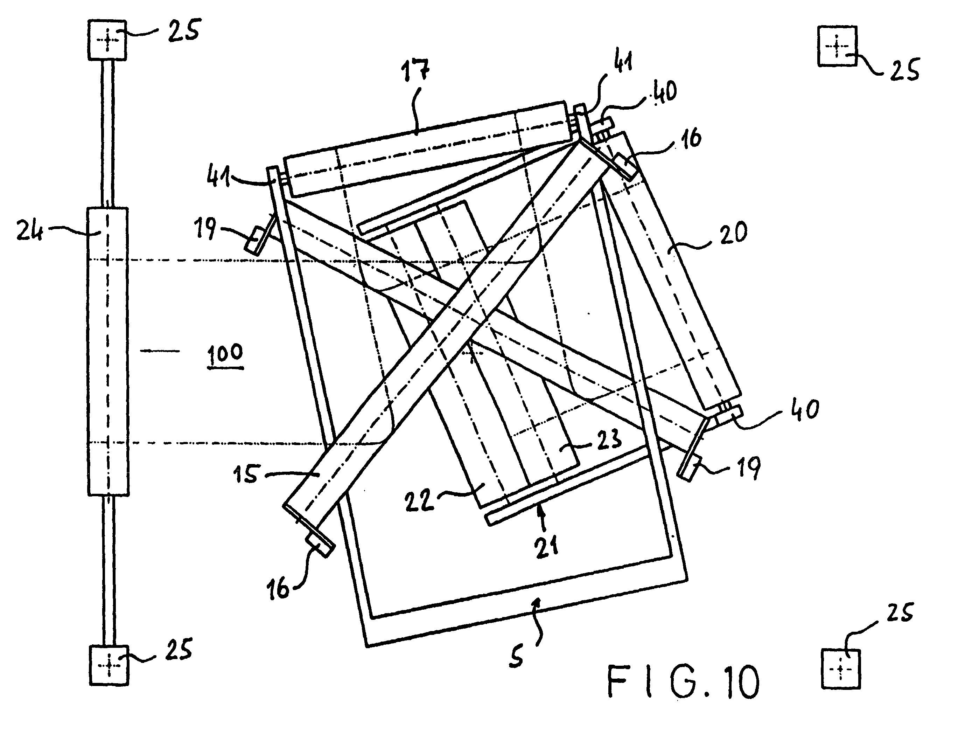

In Fig. 7 ist eine Mittelstellung der reversierenden Abzugsvorrichtung 30 entsprechend der Darstellung in Fig. 2 gezeigt. In dieser Grundstellung besitzen die Umlenkwalzen 17, 20 einerseits und die Wendestangen 15, 18 andererseits eine in senkrechter Richtung miteinander fluchtende Anordnung. Die Fig. 8 bis 10 veranschaulichen demgegenüber, ausgehend von der Mittelstellung gemäß Fig. 7, Zwischenstellungen der Umlenkwalzen 17, 20 und der Wendestangen 15, 18 entsprechend einem jeweils durchlaufenen Schwenkwinkel von +180° und -180° sowie von -78,3° als Zwischenwert gemäß der Darstellung in Fig. 3. Auch die gemeinsam mit der Umlenkwalze 20 verschwenkten Abquetschwalzen 22, 23 der Flachlegung kommen dabei zur Darstellung.

Die Wendestangen 15 und 18 weisen eine Grundstellung mit einem Abstand von der mittleren Vertikalachse 27 des Reversiersystems auf, der sich nach der Formel Wendestangendurchmesser x π/4 berechnet, womit einem seitlichen Verlaufen der Schlauchbahn 100 während des Verschwenkens des Reversiersystems entgegengewirkt wird. Insofern liegen hinsichtlich der Führung der Schlauchbahn 1 durch das Reversiersystem die gleichen Bedingungen vor, wie sie bei der DE-C-20 35 584 und der EP-B-0 408 996, die eingangs zum Stand der Technik genannt sind, ausführlich beschrieben wurden.

## Patentansprüche

1. Abzugsvorrichtung (30) für von einem Extruder (A) mit ortsfest angeordnetem Blaskopf (B) hergestellte Schlauchbahnen (100) aus Kunststoffolie, mit einer Flachlegevorrichtung (26) für die mit aufgeweitetem Rundquerschnitt zugeführte Schlauchbahn (100) und mit einer ortsfesten Fördereinrichtung (24) zum Abtransportieren der flachgelegten Schlauchbahn (100) zu einer ihrerseits ortsfesten Wickelvorrichtung (E,F), wobei zwischen der Flachlegevorrichtung (26) und der ortsfesten Fördereinrichtung (24) in einem Vorrichtungsgestell (D) ein Reversiersystem mit zumindest einer Umlenkwalze (17,20) und zumindest einer Wendestange (15,18) schwenkbar abgestützt ist, das zumindest zwei vertikal voneinander beabstandete Drehkränze (1-4) entsprechend der zumindest einen Umlenkwalze (17,20) und der zumindest einen Wendestange (15,18) umfaßt, deren Mittelpunkte in einer mittleren Vertikalachse (27) der Vorrichtung (30) angeordnet sind und die über je ein Umlaufrädergetriebe mit unterschiedlichen Schwenkwinkeln reversierend antreibbar sind, **dadurch gekennzeichnet, daß** die Umlaufrädergetriebe jeweils als offenes Planetengetriebe mit dem zugehörigen Drehkranz (1-4) als Sonnenrad und einem dessen Außenumfang zugeordneten Planetenrad (6,7,10,12) ausgebildet sind, deren das jeweilige Planetenrad (6,7,10,12) tragende Stege zu einer gemeinsamen Getriebebrücke (5) zusammengefaßt sind, und daß die Getriebebrücke (5) zugleich einen Schwenkrahmen bildet, in dem die Drehkränze (1-4) sowie die Umlenkwalze (17,20) und die Wendestange (15,18) mit ihren Halterungen (16,19) abgestützt sind.

2. Vorrichtung nach Anspruch 1, **dadurch gekennzeichnet, daß** der Schwenkrahmen (5) in Abziehrichtung (X) der Schlauchbahn (100) offen ausgebildet ist und einen oberen und einen unteren waagerechten Rahmenschenkel (33,34) zur Abstützung der Drehkränze (1-4) umfaßt.

3. Vorrichtung nach Anspruch 2, **dadurch gekennzeichnet, daß** der obere waagerechte Rahmenschenkel (33) den Innenring (31) des oberen Drehkranzes (1) abstützt, dessen äußerer Zahnkranz (32) am Vorrichtungsgestell (D) festgelegt ist, und der untere waagerechte Rahmenschenkel (33) den Innenring (31) des unteren Drehkranzes (4) abstützt, dessen äußerer Zahnkranz (32) an einem Seitengestell (21) befestigt ist, das neben der Umlenkwalze (20) die Flachlegevorrichtung (26) trägt.

4. Vorrichtung nach Anspruch 3, **dadurch gekennzeichnet, daß** der Innenring (31) des oberen Drehkranzes (1) auf der Oberseite des oberen Rahmenschenkels (33) abgestützt und an der Unterseite des oberen Rahmenschenkels (33) der Innenring (31) eines weiteren Drehkranzes (2) festgelegt ist, während der Innenring (31) des unteren Drehkranzes (4) an der Unterseite des unteren Rahmenschenkels (34) festgelegt und auf der Oberseite des unteren Rahmenschenkels (34) wiederum der Innenring (31) eines weiteren Drehkranzes (3) abgestützt ist.

5. Vorrichtung nach einem der Ansprüche 1 bis 4, **dadurch gekennzeichnet, daß** die Getriebebrücke (5) in ihrem Schwenkrahmen zugleich eine Abstützung (42) für die Antriebsmittel der Drehkränze (1-4) bildet.

6. Vorrichtung nach Anspruch 5, **dadurch gekennzeichnet, daß** die Antriebsmittel einzelne Antriebsmotoren für jeden Drehkranz (1-4) umfassen.

7. Vorrichtung nach Anspruch 5, **dadurch gekennzeichnet, daß** die Antriebsmittel einen gemeinsamen Antriebsmotor (29) für sämtliche Drehkränze (1-4) umfassen, der eine parallel zur mittleren Vertikalachse (27), jedoch mit waagerechtem Abstand von dieser, in der Getriebebrücke (5) drehbar abgestützte Antriebswelle (14) antreibt.

8. Vorrichtung nach Anspruch 7, **dadurch gekennzeichnet, daß** die Planetenräder (6,7,10,12) der einzelnen Planetengetriebe in gegenseitiger vertikaler Beabstandung entsprechend den Drehkränzen (1-4) drehfest auf der Antriebswelle (14) festgelegt sind.

9. Vorrichtung nach Anspruch 8, **dadurch gekennzeichnet, daß** die Planetenräder (6,7,10,12) teilweise direkt, teilweise über ein oder mehrere Zwischenräder (8,9,11,13) mit dem äußeren Zahnkranz (32) des jeweiligen Drehkranzes (1-4) in Eingriff stehen.

10. Vorrichtung nach einem der Ansprüche 1 bis 9, **dadurch gekennzeichnet, daß** die Drehkränze (1-4) sämtlich eine gleiche Anzahl von Zähnen aufweisen, zwei Planetenräder (6,12) ihrerseits eine gemeinsame gleiche Anzahl von Zähnen besitzen, die durch zwei teilbar ist, und die beiden anderen Planetenräder (7,10) die Hälfte der Zähnezahl der beiden erstgenannten Planetenräder (6,12) aufweisen.

11. Vorrichtung nach einem der Ansprüche 1 bis 10, **dadurch gekennzeichnet, daß** die Umlenkwalze (20) über einen Ausleger (40) am äußeren Zahnkranz (32) des Drehkranzes (4) abgestützt ist.

12. Vorrichtung nach einem der Ansprüche 1 bis 11, **dadurch gekennzeichnet, daß** die Umlenkwalze (17) an der Getriebebrücke (5) in einem Zwischenbereich zwischen dem oberen und dem unteren Rahmenschenkel (33,34) des Schwenkrahmens (5) abgestützt ist.

13. Vorrichtung nach Ansprüche 12, **dadurch gekennzeichnet, daß** die Umlenkwalze (17) von einem Ausleger (41) gehalten ist, der sich, ausgehend von einem an einen senkrechten Rahmenschenkel (35) der Getriebebrücke (5) angrenzenden Bereich, durch eine die mittlere Vertikalachse (27) enthaltende Vertikaleben hindurch zur offenen Seite des Schwenkrahmens (5) erstreckt.

14. Vorrichtung nach einem der Ansprüche 1 bis 13, **dadurch gekennzeichnet, daß** die Wendestange(n) (15,18) am äußeren Zahnkranz (32) ihres Drehkranzes (2,3) abgestützt ist/sind.

15. Vorrichtung nach einem der Ansprüche 1 bis 14, **dadurch gekennzeichnet, daß** der Schwenkrahmen (5) durch sich zwischen seinen waagerechten Rahmenschenkeln (33,34) erstreckende senkrechte Zugstangen (37) ausgesteift ist.

## Claims

1. A haul-off apparatus (30) for plastic tubular film (100) produced by an extruder (A) having a fixed blow head (B), comprising a lay-flat (26) for the tubular film (100) delivered with an expanded circular cross-section, and a fixed conveyor (24), for conveying the flattened tubular film (100) to a fixed winder (E, F), whereby between the lay-flat (26) and the fixed conveyor (24) a reversing mechanism having at least one guide roller (17, 20) and at least one turning bar (15, 18) is pivoted inside a jig (D), which reversing mechanism comprises at least two vertically separated slewing rims (1-4) having at least one guide roller (17,20) and at least one turning bar (15,18), whose centre points are located in a central vertical axis (27) of the device (30), and which may be driven in counter rotation with varying pivoting angles, by way of a planetary gearing, **characterised in that** the planetary gears are in the form of open epicyclic gears, the associated slewing rim (1-4) acting as the sun gearwheel, and a planet pinion (6, 7, 10, 12) associated with its periphery, whose cross-pieces carrying the planet pinion (6, 7, 10, 12) are joined together to form a common gearing bridge (5), and **characterised in that** the gearing bridge (5) also constitutes a slewing frame in which the slewing rims (1-4), the guide roller (17, 20) and the turning bar (15, 18), with their respective holders (16, 19), are supported.

2. A device according to claim 1, **characterised in that** the slewing frame (5) is designed open in the take-off direction (X) of the tubular film (100), and comprises a top and a bottom horizontal frame-piece (33, 34), for supporting the slewing rims (1-4).

3. A device according to claim 2, **characterised in that** the top horizontal frame-piece (33) supports the inner ring (31) of the top slewing rim (1), whose outer gear ring (32) is fixed to a jig (D), and the bottom horizontal frame-piece (33) supports the inner ring (31) of the bottom slewing rim (4), whose outer gear ring (32) is fixed to a side-frame (21), which carries the guide roller (20) and the lay-flat (26).

4. A device according to claim 3, **characterised in that** the inner ring (31) of the top slewing rim (I) is supported at the top of the top frame-piece (33), and is fixed to the bottom of the top frame-piece (33) of the inner ring (31) of another slewing rim (2), while the inner ring (31) of the bottom slewing rim (4) is fixed to the bottom of the bottom frame-piece (34), and the inner ring (31) of another slewing rim (3) is in its turn supported at the top of the bottom frame-piece (34).

5. A device in accordance with any one of claims 1 through 4, **characterised in that** the gearing bridge (5) in its stewing frame also constitutes a support (42) for the drive of the slewing rim (1-4).

6. A device according to claim 5, **characterised in that** the drives comprise motors, respectively for each slewing rim (1-4).

7. A device according to claim 5, **characterised in that** the drives comprise a common motor (29) for all slewing rims (1-4), which drives a main shaft (14) parallel to the central vertical axis (27, but with horizontal spacing from this, pivoted in the gearing bridge (5).

8. A device according to claim 7, **characterised in that** the planet pinions (6, 7, 10, 12) of the respective epicyclic gearing are fixed to the main shaft (14) with vertical spacing with respect to each other corresponding to the slewing rims (1-4).

9. A device according to claim 8, **characterised in that** the planet pinions (6, 7, 10, 12) engage with the outer gear ring (32) of the respective slewing rim (1-4), in part directly, in part by way of one or more intermediate gear wheels (8, 9, 11,13).

10. A device according to any one of claims 1 through 9, **characterised in that** the slewing rims (1-4) all have the same number of teeth, two planet pinions (6, 12) have an identical number of teeth, divisible by two, and the two remaining planet pinions (7,10) have half the number of teeth of the two first-mentioned planet pinions (6, 12).

11. A device according to any one of claims 1 through 10, **characterised in that** the guide roller (20) is supported by an arm (40) on the outer gear ring (32) of the slewing rim (4).

12. A device according to any one of claims 1 through 11, **characterised in that** the guide roller (17) is supported by the gearing bridge (5) in an intermediate area located between the top and the bottom frame-piece (33, 34) on the slewing frame (5).

13. A device according to claim 12, **characterised in that** the guide roller (17) is held by an arm (41) which, starting from an area bordering on a vertical frame-piece (35) on the gearing bridge (5), extends along a vertical plane containing the central vertical axis (27), to the open side of the slewing frame (5).

14. A device according to any one of claims 1 through 13, **characterised in that** the turning bar(s) (15, 18) is/are supported on the outer gear ring (32) of its slewing rim.

15. A device according to any one of claims 1 through 14, **characterised in that** the slewing frame (5) is stiffened by vertical draw rods (37) extending between its horizontal frame pieces (33, 34).

## Revendications

1. Dispositif de tirage (30) pour des bandes tubulaires (100) en film de matière plastique produites par une extrudeuse (A) possédant une tête de soufflage (B) disposée en position fixe, comprenant un dispositif de mise à plat (26) pour la bande tubulaire (100) acheminée avec une section ronde élargie, et un dispositif de transport fixe (24) destiné à envoyer la bande tubulaire (100) mise à plat à un dispositif d'enroulement (E, F), lui aussi fixe, cependant que, entre le dispositif de mise à plat (26) et le dispositif de transport fixe (24), est monté oscillant, dans un bâti de dispositif (D), un système réversible comprenant au moins un rouleau de renvoi (17, 20) et au moins une barre de retournement (15, 18), qui comprend au moins deux couronnes tournantes (1-4) disposées à distance verticale l'une de l'autre qui correspondent à l'au moins un rouleau de renvoi (17, 20) et à l'au moins une barre de retournement (15, 18) dont les centres sont disposés sur un axe vertical médian (27) du dispositif (30), et qui peuvent être entraînés de façon réversible chacun par l'intermédiaire d'un train épicycloïdal avec des angles d'oscillation différents,
**caractérisé en ce que**
les trains épicycloïdaux sont constitués chacun par un train planétaire ouvert ayant la couronne tournante (1-4) comme roue planétaire et possédant un pignon satellite (6, 7, 10, 12) associé à sa circonférence extérieure, dont les barres qui portent chacune le pignon satellite (6, 7, 10, 12) correspondant sont réunies pour former un pont de mécanisme (5), et **en ce que** le pont de mécanisme (5) forme en même temps un cadre oscillant dans lequel les couronnes tournantes (1-4), ainsi que le rouleau de renvoi (17, 20) et la barre de retournement (15, 18), avec leurs montures (16, 19), prennent appui.

2. Dispositif selon la revendication 1,
**caractérisé en ce que**
le cadre oscillant (5) est réalisé sous une forme ouverte dans la direction du tirage (X) de la bande tubulaire (100), et comprend une branche de cadre supérieure horizontale et une branche de cadre inférieure horizontale (33, 34) destinées à donner appui aux couronnes tournantes (1-4).

3. Dispositif selon la revendication 2,
**caractérisé en ce que**
la branche de cadre horizontale supérieure (33) donne appui à l'anneau intérieur (31) de la couronne tournante supérieure (1) dont la couronne dentée extérieure (32) est fixée au bâti (D) du dispositif, et la branche de cadre horizontale inférieure (33) donne appui à l'anneau intérieur (31) de la couronne tournante inférieure (4), dont la couronne dentée extérieure (32) est fixée à un bâti latéral (21) qui porte, en supplément du rouleau de renvoi (20), le dispositif de mise à plat (26).

4. Dispositif selon la revendication 3,
**caractérisé en ce que**
l'anneau intérieur (31) de la couronne tournante supérieure (1) prend appui sur la face supérieure de la branche de cadre supérieure (33) et l'anneau intérieur (31) d'une autre couronne tournante (2) est fixée à la face inférieure de la branche de cadre supérieur (33), tandis que l'anneau intérieur (31) de la couronne tournante inférieure (4) est fixé à la face inférieure de la branche de cadre inférieur (34) et que, de nouveau, l'anneau intérieur (31) d'une autre couronne tournante (3) prend appui sur la face supérieure de la branche de cadre inférieur (34).

5. Dispositif selon une des revendications 1 à 4,
**caractérisé en ce que**
dans son cadre oscillant, le pont de mécanisme (5) forme en même temps un appui (42) pour les moyens d'entraînement des couronnes tournantes (1-4).

6. Dispositif selon la revendication 5,
**caractérisé en ce que**
les moyens d'entraînement comprennent des moteurs d'entraînement distincts pour les couronnes tournantes (1-4).

7. Dispositif selon la revendication 5,
**caractérisé en ce que**
les moyens d'entraînement comprennent un moteur d'entraînement commun (29) pour toutes les couronnes tournantes (1-4), qui entraîne un arbre d'entraînement (14) supporté rotatif dans le pont de mécanisme (5), parallèlement à l'axe vertical médian (27) mais placé à une distance horizontale de cet axe.

8. Dispositif selon la revendication 7,
**caractérisé en ce que**
les pignons satellites (6, 7, 10, 12) des différents trains planétaires sont fixés solidairement en rotation sur l'arbre d'entraînement (14), à un écartement vertical mutuel pour correspondre aux couronnes tournantes (1-4).

9. Dispositif selon la revendication 8,
**caractérisé en ce que**
les pignons satellites (6, 7, 10, 12) sont en prise avec la couronne dentée extérieure (32) de la couronne tournante (1-4) correspondante, en partie directement et en partie par l'intermédiaire d'un ou plusieurs roues intermédiaires (8, 9, 11, 13).

10. Dispositif selon une des revendications 1 à 9,
**caractérisé en ce que**
les couronnes tournantes (1-4) présentent toutes le même nombre de dents, deux pignons satellites (6, 12) possèdent de leur côté le même nombre de dents en commun, qui est divisible par deux, et les deux autres pignons satellites (7, 10) présentent la moitié du nombre de dents des deux pignons satellites (6, 12) mentionnés en premier.

11. Dispositif selon une des revendications 1 à 10,
**caractérisé en ce que**
le rouleau de renvoi (20) prend appuie sur la couronne dentée extérieure (32) de la couronne tournante (4) par l'intermédiaire d'une console (40).

12. Dispositif selon une des revendications 1 à 11,
**caractérisé en ce que**
le rouleau de renvoi (17) prend appui sur le pont de mécanisme (5) dans une région intermédiaire entre la branche de cadre supérieure et la branche de cadre inférieure (33, 34) du cadre oscillant (5).

13. Dispositif selon les revendications 12,
**caractérisé en ce que**
le rouleau de renvoi (17) est tenu par une console (41) qui part d'une région adjacente à une branche de cadre verticale (35) du pont de mécanisme (5), en traversant un plan vertical qui contient l'axe vertical médian (27), pour atteindre le côté ouvert du cadre oscillant (5).

14. Dispositif selon une des revendications 1 à 13,
**caractérisé en ce que**
la ou les barres de retournement (15, 18) est/sont appuyée(s) sur la couronne dentée extérieure (32) de sa couronne tournante (2, 3).

15. Dispositif selon une des revendications 1 à 14,
**caractérisé en ce que**
le cadre oscillant (5) est raidi par des tirants verticaux (37) qui s'étendent entre ses branches de cadre horizontales (33, 34).
